(19) **Europäisches Patentamt / European Patent Office / Office européen des brevets**

(11) **EP 4 693 535 A2**

(12) **EUROPEAN PATENT APPLICATION**
published in accordance with Art. 153(4) EPC

(43) Date of publication:
**11.02.2026 Bulletin 2026/07**

(21) Application number: **24811465.4**

(22) Date of filing: **17.05.2024**

(51) International Patent Classification (IPC):
$H01M\ 8/1044$ (2016.01)  $H01M\ 8/1039$ (2016.01)
$H01M\ 8/1048$ (2016.01)  $H01M\ 8/1058$ (2016.01)
$H01M\ 8/1004$ (2016.01)  $H01M\ 8/1067$ (2016.01)
$C08L\ 27/18$ (2006.01)  $C08K\ 5/521$ (2006.01)
$C08K\ 5/3415$ (2006.01)  $C08K\ 5/3417$ (2006.01)

(52) Cooperative Patent Classification (CPC):
Y02E 60/50

(86) International application number:
**PCT/KR2024/095789**

(87) International publication number:
**WO 2024/242529 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.05.2023  KR 20230065541
16.05.2024  KR 20240064073**

(71) Applicant: **Kolon Industries, Inc.
Seoul 07793 (KR)**

(72) Inventors:
• **PARK, Jung Hwa**
  **Seoul 07793 (KR)**
• **LEE, Dong Hoon**
  **Seoul 07793 (KR)**

• **SONG, Kum Suck**
  **Seoul 07793 (KR)**
• **YUN, Sung Hyun**
  **Seoul 07793 (KR)**
• **YUM, Seung Jib**
  **Seoul 07793 (KR)**
• **OH, Chang Hoon**
  **Seoul 07793 (KR)**
• **LEE, Hye Song**
  **Seoul 07793 (KR)**
• **LEE, Eun Su**
  **Seoul 07793 (KR)**

(74) Representative: **Vossius & Partner
Patentanwälte Rechtsanwälte mbB
Siebertstraße 3
81675 München (DE)**

(54) **POLYMER ELECTROLYTE MEMBRANE, MEMBRANE-ELECTRODE ASSEMBLY, AND FUEL CELL COMPRISING SAME**

(57) Disclosed is a polymer electrolyte membrane having improved ion conductivity performance by maintaining the moisture content therein under high-temperature and/or low-humidity conditions. According to one aspect, the polymer electrolyte membrane includes a porous support; a first ion conductor layer disposed on a first surface of the porous support; and a second ion conductor layer disposed on a second surface opposite to the first surface of the porous support, the first ion conductor layer containing an ion conductor and an absorbent compound, wherein the absorbent compound forms a basket structure by molecular motion, and the second ion conductor layer contains no absorbent compound.

## FIG. 1A

## Description

### Technical Field

The present disclosure relates to an ion conductor composition, and more particularly, to an ion conductor composition, a polymer electrolyte membrane, a membrane-electrode assembly, and a fuel cell including the same.

### Background Art

Fuel cells, as batteries including a power generation system for directly converting energy of a chemical reaction such as an oxidation/reduction reaction of hydrogen and oxygen contained in hydrocarbon-based fuel materials including methanol, ethanol and natural gas into electrical energy, have been spotlighted as a next-generation clean energy source that can replace fossil energy due to their environment-friendly characteristics of high energy efficiency and low contaminant discharge. Fuel cells may be classified into alkaline electrolyte membrane fuel cells, polymer electrolyte membrane fuel cells (PEMFCs) and the likes depending on conditions and types of electrolytes. The polymer electrolyte membrane fuel cells among the fuel cells are attracting more attention as power source devices for portable, automobile, and domestic applications, due to their advantages such as a low operating temperature of less than 100°C, fast starting and response characteristics, and excellent durability. Typical examples of the polymer electrolyte membrane fuel cells may include proton exchange membrane fuel cells (PEMFCs) using hydrogen gas as a fuel, direct methanol fuel cells (DMFCs) using liquid methanol as a fuel, and others.

A reaction occurring in the polymer electrolyte membrane fuel cells may be summarized as follows. First, when a fuel such as hydrogen gas is supplied to an anode electrode, hydrogen ions ($H^+$) and electrons ($e^-$) are generated in the anode electrode by an oxidation reaction of the hydrogen gas. The generated hydrogen ions are transferred to a cathode electrode through a polymer electrolyte membrane, and the generated electrons are transferred to the cathode electrode through an external circuit. Oxygen gas is supplied from the cathode electrode, and oxygen is combined with the hydrogen ions and electrons to produce water by a reduction reaction of oxygen.

Meanwhile, there are many technical problems to be solved in order to realize commercial use of the polymer electrolyte membrane fuel cells, and, in particular, it is necessary to realize high performance, long lifespan, and price reduction. An element that exerts greatest influence thereon is a membrane-electrode assembly (MEA), and, in particular, a polymer electrolyte membrane is one of core elements that exert greatest influence on the performance and price of the MEA. Requirements for the polymer electrolyte membrane necessary to operate the polymer electrolyte membrane fuel cell include high proton conductivity, chemical stability, low fuel permeability, high mechanical strength, and excellent dimensional stability. A conventional polymer electrolyte membrane tends to have difficulty in normally realizing high performance under specific temperature and relative humidity environments, particularly under high-temperature or low-humidity conditions. As a result, a polymer electrolyte membrane fuel cell having the conventional polymer electrolyte membrane applied thereto is limited in a range within which the fuel cell is capable of being used.

In order to overcome the difficulty of the polymer electrolyte membrane in realizing high performance, particularly under high-temperature and/or low-humidity conditions, research has continuously been conducted to introduce hygroscopic materials into the polymer electrolyte membrane to thereby improve the ionic conductivity of the polymer electrolyte membrane.

### DISCLOSURE

### Technical Problem

An object of the present disclosure is to provide a polymer electrolyte membrane capable of improving ionic conductivity performance by maintaining the moisture content in the polymer electrolyte membrane under high-temperature and/or low-humidity conditions.

Another object of the present disclosure is to provide a polymer electrolyte membrane capable of making moisture distribution in the polymer electrolyte membrane even by absorbing moisture generated at a cathode during fuel cell operation.

Still another object of the present disclosure is to provide a polymer electrolyte membrane capable of minimizing anodic drying due to insufficient water and moisture at an anode, water flooding due to excessive water and moisture at a cathode, and mass transport resistance caused by the water flooding.

Yet another object of the present disclosure is to provide a membrane-electrode assembly including the polymer electrolyte membrane.

Still yet another object of the present disclosure is to provide a fuel cell including the membrane-electrode assembly.

The objects of the present disclosure are not limited to those mentioned above. Other objects and advantages of the present disclosure that are not mentioned will be understood from the following description and will be more clearly understood by embodiments of the present disclosure. In addition, it will be readily appreciated that the objects and advantages of the present disclosure may be realized by the means and combinations thereof set forth in the claims.

## Technical Solution

To achieve the above objects, according to a fist aspect of the present disclosure, there is provided a polymer electrolyte membrane comprising: a porous support; a first ion conductor layer disposed on a first surface of the porous support; and a second ion conductor layer disposed on a second surface of the porous support opposite to the first surface, wherein the first ion conductor layer includes an ion conductor and an absorbent compound, the absorbent compound forms a basket structure through molecular motion, and the second ion conductor layer does not include an absorbent compound.

According to a second aspect of the present disclosure, in the first aspect, the absorbent compound of the first ion conductor layer may include at least one of a hexadentate ligand; an alicyclic compound having 5 to 6 carbon atoms and containing 4 or more hydrophilic functional groups in a side chain; a 4-pyrrole-containing compound; a triazole-based compound containing 3 or more hydrophilic functional groups in a side chain; a phosphonic acid-based compound; a compound containing 2 or more benzene rings in a molecule; a chain-type compound containing an amino group and a carboxyl group; and a crown ether-based compound.

According to a third aspect of the present disclosure, in the second aspect, the hexadentate ligand may be any one selected from the group consisting of ethylenediaminetetraacetic acid (EDTA), hydroxyethylethylenediaminetriacetic acid (HEDTA), and combinations thereof.

According to a fourth aspect of the present disclosure, in the second or third aspect, the alicyclic compound having 5 to 6 carbon atoms and containing 4 or more hydrophilic functional groups in a side chain may include phytic acid.

According to a fifth aspect of the present disclosure, in any one of the second to fourth aspects, the 4-pyrrole-containing compound may include any one selected from the group consisting of a substituted or unsubstituted porphine; a substituted or unsubstituted phthalocyanine; and combinations thereof.

According to a sixth aspect of the present disclosure, in any one of the second to fifth aspects, the triazole-based compound containing 3 or more hydrophilic functional groups in a side chain may include deferasirox.

According to a seventh aspect of the present disclosure, in any one of the second to sixth aspects, the crown ether-based compound may include a molecular structure represented by the following general formula 1 as a backbone:

$$[\text{Formula 1}] \qquad [C_2H_4O]_n$$

wherein n is 3 to 10. Here, n may be 3, 4, 5, 6, 7, 8, 9 or 10.

According to an eighth aspect of the present disclosure, in any one of the first to seventh aspects, the ion conductor may be included in internal pores of the porous support.

According to a ninth aspect of the present disclosure, there is provided a membrane-electrode assembly comprising: an anode; a cathode; and the polymer electrolyte membrane according to any one of the first to eighth aspects disposed between the anode and the cathode, wherein the first ion conductor layer is in contact with the anode.

According to a tenth aspect of the present disclosure, there is provided a fuel cell comprising the membrane-electrode assembly according to the ninth aspect.

The technical solution described above does not enumerate all the features of the present disclosure, and may be combined with some embodiments of the present specification. The various features of the present disclosure and the resulting advantages and effects may be understood in more detail by referring to the following detailed description.

## Advantageous Effects

According to an aspect of the present disclosure, it is possible to improve ionic conductivity performance by maintaining the moisture content in a polymer electrolyte membrane under high-temperature and/or low-humidity conditions, make moisture distribution in the polymer electrolyte membrane even by absorbing moisture generated at a cathode during fuel cell operation, and reduce mass transport resistance formed by excessive water generated at the cathode.

In addition to the effects described above, the detailed effects of the present disclosure will be described below together with the specific contents for carrying out the present disclosure.

**Brief Description of Drawings**

Fig. 1A is a cross-sectional view of a polymer electrolyte membrane according to an embodiment of the present disclosure.
Fig. 1B is a cross-sectional view showing a membrane-electrode assembly according to an embodiment of the present disclosure.
Fig. 2 is a schematic view showing a fuel cell according to an embodiment of the present disclosure.

**Best Mode**

In the present specification, singular expressions include plural expressions unless the context clearly indicates otherwise.

The numerical range indicated by the term "to" in this specification refers to a numerical range that includes the values described before and after the term as the lower limit and the upper limit, respectively. When multiple numerical values are disclosed as the upper and lower limits of any numerical range, the numerical range disclosed in this specification can be understood as any numerical range that has any one of the multiple lower limit values and any one of the multiple upper limit values as the lower limit and the upper limit, respectively. For example, when the specification describes a to b, or c to d, it can be understood that a or more and b or less, a or more and d or less, c or more and d or less, or c or more and b or less is described.

In this specification, "at least one of a, b and c" may include a, b or c alone, or a combination of two or more selected from the group consisting of a, b and c.

In this specification, the term "layer" or "film" may include, when observing the area where the layer or film exists, not only cases where the layer or film is formed over the entire area but also cases where the layer or film is formed over only a portion of the area. For example, the surface of the layer or film may be defined to include a flat shape, a non-flat shape, and combinations thereof; or a continuous shape, a discontinuous shape, and combinations thereof. For example, when another member is formed as a layer or film directly on top of one member, the coverage of the other member on the surface of the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more. For example, even when a plurality of particles form a clustered structure, it may be defined as a "layer" or "film."

In this specification, unless otherwise defined below, "substituted" means that at least one hydrogen atom is replaced with any one selected from the group consisting of a halogen atom, a hydroxyl group, a carboxyl group, a nitro group, an amine group, a sulfide group, a thiol group, an alkoxy group, an acetoxy group, a nitrile group, an aldehyde group, an ether group, an ester group, an acetal group, a ketone group, a $C_1$-$C_{30}$ alkyl group, a $C_2$-$C_{30}$ alkenyl group, a $C_2$-$C_{30}$ alkynyl group, a $C_1$-$C_{40}$ alkylsilyl group, a $C_5$-$C_{40}$ arylsilyl group, a $C_3$-$C_{30}$ cycloalkyl group, a $C_3$-$C_{30}$ allyl group, a $C_6$-$C_{30}$ aryl group, a heterocyclic group (e.g., a $C_2$-$C_{30}$ heterocycloalkyl group, a $C_3$-$C_{30}$ heteroaryl group), derivatives thereof, and combinations thereof. Here, the respective substituents may be bonded to each other when they are adjacent to each other, to form a substituted or unsubstituted fused ring or spiro structure.

In this specification, "fused ring" means a ring in which two or more rings are joined by sharing two or more atoms, and may include, for example, a fused aliphatic ring, a fused aromatic ring, a fused heteroaliphatic ring, a fused heteroaromatic ring, or combinations thereof.

As used herein, "spiro structure" means a structure having a spiro union, which means a connection formed by two rings sharing only one atom.

In this specification, the term 'basket structure' refers to a structure that forms a basket structure through molecular motion, and specifically, a structure in which a part of a molecule can become closer to or further away from another part of the molecule through molecular motion, and more specifically, a structure that forms a basket shape when a part of a molecule becomes closer to another part of the molecule. For example, the basket structure may refer to a structure in which a non-shared electron pair in a molecule can form a coordinate bond or an ionic bond with a metal or a metal ion, or may refer to a structure in which a non-shared electron pair in a molecule can interact with a metal or a metal ion to form a complex. As a quantitative analysis method for determining whether or not it is the basket structure, any one method selected from the group consisting of FT-IR (Fourier transform infrared) Spectrometer, NMR (Nuclear Magnetic Resonance), Raman spectroscopy, XRD (X-ray diffraction), MD Simulation, and combinations thereof may be used. For example, when the above-mentioned absorbent compound forms a basket structure by molecular motion, the shortest distance between the nearest atomic groups, atoms or functional groups within the molecule may be 500 Å or less, 400 Å or less, 300 Å or less, 200 Å or less, 100 Å or less, 90 Å or less, 80 Å or less, 70 Å or less, 60 Å or less, 50 Å or less, 40 Å or less, 30 Å or less, 20 Å or less, 10 Å or less, 1 Å or less, or 0.1 Å or less. Here, the shortest distance can be analyzed through an analysis method of X-ray diffraction or MD simulation.

An embodiment of the present disclosure may provide an ion conductor composition including an ion conductor and an absorbent compound, wherein the absorbent compound forms a basket structure through molecular motion. According to an aspect of the present disclosure, by using the absorbent compound that forms a basket structure through molecular motion, the moisture content in a polymer electrolyte membrane can be maintained under high-temperature and/or low-humidity conditions, thereby improving ion conductivity performance, and by absorbing excess water molecules generated at a cathode during fuel cell operation, the moisture distribution in the polymer electrolyte membrane can be evenly maintained, and mass transport resistance caused by excess water can be minimized.

Hereinafter, the configuration of the present disclosure will be described in more detail.

**1. Ion conductor composition**

An ion conductor composition according to the present disclosure may include an ion conductor dispersion and an absorbent compound.

The absorbent compound according to the present disclosure forms a basket structure through molecular motion. Specifically, the basket structure has the property of effectively capturing water during fuel cell operation, thereby maintaining the moisture content in a polymer electrolyte membrane even under high-temperature and/or low-humidity conditions. By introducing a compound forming such a basket structure, it is possible to improve the ionic conductivity performance of the polymer electrolyte membrane and make moisture distribution in the polymer electrolyte membrane even by effectively absorbing moisture generated at a cathode during fuel cell operation.

The absorbent compound according to the present disclosure may include at least any one of a hexadentate ligand; an alicyclic compound having 5 to 6 carbon atoms and containing 4 or more hydrophilic functional groups in a side chain; a 4-pyrrole-containing compound; a triazole-based compound containing 3 or more hydrophilic functional groups in a side chain; a phosphonic acid-based compound; a compound containing 2 or more benzene rings in a molecule; a chain-type compound containing an amino group and a carboxyl group; and a crown ether-based compound. Specifically, the absorbent compound may include a 4-pyrrole-containing compound, and more specifically, the absorbent compound may include a substituted or unsubstituted porphine. Here, the 4-pyrrole-containing compound may exhibit relatively superior water-capturing capacity compared to other basket-structure compounds, thereby achieving the effects of further enhancing the ionic conductivity of a membrane-electrode assembly, improving moisture retention capacity, and increasing the water content even under high-temperature and low-humidity conditions.

In some examples, the hexadentate ligand may effectively absorb or capture water by readily forming a basket structure due to the attraction and repulsion between electron pairs. As the basket structure is easily formed through molecular motion, it is possible to improve the ionic conductivity performance of the polymer electrolyte membrane and make moisture distribution in the polymer electrolyte membrane even by absorbing moisture generated at a cathode during fuel cell operation. The hexadentate ligand may be any one selected from the group consisting of, for example, ethylenediaminetetraacetic acid (EDTA), hydroxyethylethylenediaminetriacetic acid (HEDTA), and combinations thereof.

In some examples, the alicyclic compound having 5 to 6 carbon atoms and containing 4 or more hydrophilic functional groups in a side chain may readily form a basket structure as the 4 or more hydrophilic functional groups form intramolecular hydrogen bonds through molecular motion. That is, the alicyclic compound may include cyclopentane or cyclohexane as a parent structure, and the side chains may all be substituted with hydrophilic functional groups to readily form a basket structure. The 4 or more hydrophilic functional groups may each independently be any one selected from the group consisting of a phosphate ester group, a hydroxyl group, a carboxyl group, and a thiol group. The alicyclic compound having 5 to 6 carbon atoms and containing 4 or more hydrophilic functional groups in the side chain may include, for example, phytic acid.

In some examples, the 4-pyrrole-containing compound may be defined as a compound including 4 pyrrole structures in a molecule. The 4-pyrrole-containing compound may include, for example, any one selected from the group consisting of a substituted or unsubstituted porphine, a substituted or unsubstituted phthalocyanine; and combinations thereof. In this case, the term "substituted" means that at least one hydrogen atom is substituted with at least any one selected from the group consisting of a hydroxyl group, a thiol group, and a carboxyl group. The substituted or unsubstituted porphine, and the substituted or unsubstituted phthalocyanine may form a structure in which polar functional groups containing nitrogen atoms aggregate within the ring, thereby readily forming a basket structure and thus effectively absorbing or capturing water.

In some examples, the triazole-based compound containing 3 or more hydrophilic functional groups in the side chain may include a hydrophilic functional group bonded to a linking group. Specifically, the linking group may be an aryl group, and more specifically, a phenyl group. The hydrophilic functional groups linked to a triazole structure through the linking group may readily form a basket structure through molecular motion, thereby effectively absorbing or capturing water. The triazole-based compound containing 3 or more hydrophilic functional groups in the side chain may include, for example, deferasirox.

In some examples, the phosphonic acid-based compound may be one or more selected from the group consisting of diethylenetriamine pentamethylenephosphonic acid (DTPPH), nitriletrimethylenephosphonic acid (NTMP), and 1-hydroxyethane-1,1-diphosphonic acid (HEDP).

In some examples, the compound containing 2 or more benzene rings in a molecule may be 2-methyl-6-nitrobenzoic anhydride (MNBA), 9,9-bis(4-hydroxyphenyl)fluorine (BHPF), etc.

In some examples, the chain-type compound containing an amino group and a carboxyl group may be one or more selected from the group consisting of diethylenetriaminepentaacetic acid (DTPA), hydroxyaminopolycarboxylic acids (HAPCAs), and nitrilotriacetic acid (NTA).

In some examples, the crown ether-based compound may include a molecular structure represented by the following general formula 1 as a backbone:

$$[\text{Formula 1}] \qquad [C_2H_4O]_n$$

wherein n may be 3 to 10, and specifically 4 to 6. In general formula 1, when n satisfies the above numerical range, the crown ether-based compound may readily form a basket structure due to molecular motion.

According to another embodiment of the present disclosure, the crown ether-based compound may contain a hydrophilic functional group in a side chain. The hydrophilic functional group may be linked to a carbon chain of the crown ether-based compound. The hydrophilic functional group may be any one selected from the group consisting of, for example, a hydroxyl group, a carboxyl group, and a thiol group.

In some embodiments of the present disclosure, the content of the absorbent compound may be 0.1 to 20 parts by weight, specifically 0.2 to 15 parts by weight, more specifically 0.5 to 10 parts by weight, further specifically 0.5 to 7.5 parts by weight, 0.5 to 7.0 parts by weight, 0.5 to 6.0 parts by weight, 0.5 to 5.0 parts by weight, 0.5 to 4.0 parts by weight, 0.5 to 3.0 parts by weight, 0.5 to 2.0 parts by weight, or 0.5 to 1.0 parts by weight, preferably 0.5 to 0.7 parts by weight, and more preferably 0.5 to 0.6 parts by weight, based on 100 parts by weight of the ion conductor (total solid content of the ion conductor dispersion). When the content of the absorbent compound satisfies the above numerical range, as the moisture content in the polymer electrolyte membrane under high-temperature and/or low-humidity conditions is sufficient, it is possible to further improve proton conductivity performance and at the same time shorten a time to reach complete wetting.

The ion conductor included in the ion conductor dispersion according to the present disclosure may be one selected from the group consisting of, for example, a fluorine-based ion conductor, a hydrocarbon-based ion conductor, and combinations thereof.

The ion conductor may be a cation conductor having a cation-exchange functional group such as a hydrogen ion, or an anion conductor having an anion-exchange functional group such as a hydroxide ion. The cation-exchange functional group may be any one selected from the group consisting of a sulfonic acid group, a carboxyl group, a boronic acid group, a phosphoric acid group, an imide group, a sulfonimide group, a sulfonamide group, a sulfonic acid fluoride group, and combinations thereof, and may generally be a sulfonic acid group or a carboxyl group. For example, the fluorine-based ion conductor may correspond to perfluorosulfonic acid (PFSA).

The cation conductor may include the cation exchange functional group, and may include a fluorine-based polymer containing fluorine in a main chain, a hydrocarbon-based polymer such as benzimidazole, polyamide, polyamideimide, polyimide, polyacetal, polyethylene, polypropylene, acrylic resins, polyester, polysulfone, polyether, polyetherimide, polyester, polyethersulfone, polyetherimide, polycarbonate, polystyrene, polyphenylene sulfide, polyetheretherketone, polyetherketone, polyarylethersulfone, polyphosphazene, or polyphenylquinoxaline, a partially fluorinated polymers such as a polystyrene-graft-ethylene-tetrafluoroethylene copolymer or a polystyrene-graft-polytetrafluoroethylene copolymer, a sulfonimide, or a mixture thereof.

More specifically, when the cation conductor is a proton conductor, the polymers may include a cation exchange group selected from the group consisting of a sulfonic acid group, a carboxylic acid group, a phosphoric acid group, a phosphonic acid group, and derivatives thereof. A specific example includes the fluorine-based polymer including poly(perfluorosulfonic acid), poly(perfluorocarboxylic acid), a copolymer of tetrafluoroethylene and a fluorovinyl ether containing sulfonic acid groups, a defluorinated sulfurized polyether ketone, or a mixture thereof.

The anion conductor, as a polymer capable of transporting anions such as hydroxide ions, may be commercially available in the form of hydroxide or halide (generally chloride). The anion conductor may be used in industrial applications such as water purification, metal separation, or catalytic processes.

As the anion conductor, a metal hydroxide-doped polymer may be generally used. Specifically, metal hydroxide-doped poly(ethersulfone), polystyrene, vinyl-based polymers, poly(vinyl chloride), poly(vinylidene fluoride), poly(tetrafluoroethylene), poly(benzimidazole), or poly(ethylene glycol) may be used.

The hydrocarbon-based ion conductor may be one selected from the group consisting of, for example, sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and combinations thereof.

In some examples, the solvent for the ion conductor dispersion is not particularly limited, but may be appropriately selected according to the characteristics of the fluorine-based ion conductor and the hydrocarbon-based ion conductor. The solvent may include, for example, water, alcohols, or a mixture thereof.

## 2. Polymer electrolyte membrane

According to an aspect of the present disclosure, there is provided a polymer electrolyte membrane including: a porous support; a first ion conductor layer disposed on a first surface of the porous support; and a second ion conductor layer disposed on a second surface of the porous support opposite to the first surface, wherein the first ion conductor layer includes an ion conductor and an absorbent compound, the absorbent compound forms a basket structure through molecular motion, and the second ion conductor layer does not include an absorbent compound.

Here, the absorbent compound in the first ion conductor layer may include at least any one of the absorbent compounds capable of forming the aforementioned basket structure.

The absorbent compound not included in the second ion conductor layer is not particularly limited, and may be a non-basket-structured absorbent compound conventionally used in the art or one of the aforementioned basket-structured absorbent compounds. For example, the non-basket-structured absorbent compound not included in the second ion conductor layer may include a superabsorbent polymer, specifically one or more selected from the group consisting of sodium polyacrylate, potassium polyacrylate, polyvinyl alcohol, polyacrylamide, and polyoxyethylene. As another example, the non-basket-structured absorbent compound not included in the second ion conductor layer may include an absorbent inorganic particle, specifically amorphous silica particles.

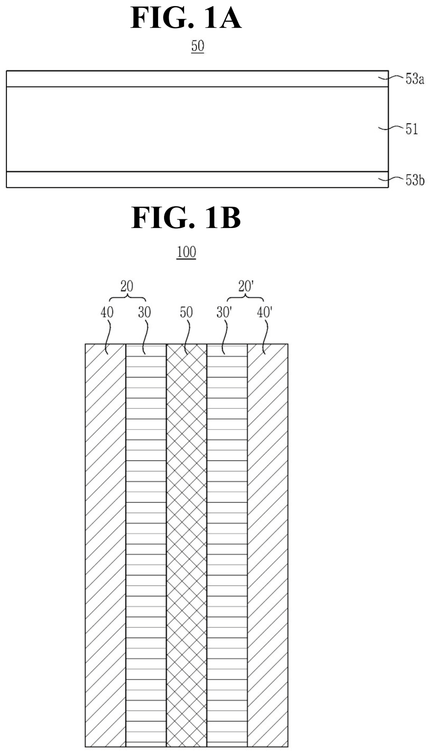

Hereinafter, the configuration of the present disclosure will be described in more detail with reference to Fig. 1A.

Fig. 1A is a cross-sectional view of a polymer electrolyte membrane according to an embodiment of the present disclosure.

Referring to Fig. 1A, a polymer electrolyte membrane 50 according to the present disclosure includes a porous support 51. For example, the ion conductor may be included in internal pores of the porous support 51. The polymer electrolyte membrane may be in the form of a reinforced composite membrane, in which the porous support is introduced, thereby further improving durability.

The porous support 51 according to the present disclosure may be one selected from the group consisting of a fluorine-based porous support, a non-fluorine-based porous support, and combinations thereof.

The fluorine-based porous support according to an embodiment of the present disclosure may include a highly fluorinated polymer having excellent resistance to thermal and chemical degradation, preferably a perfluorinated polymer. Examples thereof may include polytetrafluoroethylene (PTFE), or a copolymer of tetrafluoroethylene and $CF_2=CFC_nF_{2n+1}$ (where n is a real number from 1 to 5) or $CF_2=CFO-(CF_2CF(CF_3)O)_mC_nF_{2n+1}$ (where m is a real number from 0 to 15, and n is a real number from 1 to 15).

The fluorine-based porous support according to another embodiment of the present disclosure may correspond to expanded polytetrafluoroethylene (e-PTFE) having a microstructure of polymer fibrils or a microstructure in which nodes are interconnected by fibrils. In addition, as the porous support, a film having a microstructure of polymer fibrils without such nodes may also be used.

The fluorine-based porous support according to another embodiment of the present disclosure may include a perfluorinated polymer. The fluorine-based porous support may correspond to a porous support obtained by extrusion-molding dispersion-polymerized PTFE into a tape in the presence of a lubricant and then stretching the resulting material, thereby becoming more porous and stronger.

Furthermore, the amorphous content of the PTFE may be increased by heat-treating the e-PTFE at a temperature exceeding the melting point of the PTFE (about 342°C). The e-PTFE film manufactured by this method may have micropores with various diameters and porosity. The e-PTFE film manufactured by this method may have at least 35% micropores, and the diameter of the micropores may be about 0.01 to 1 μm.

The non-fluorine-based porous support according to an embodiment of the present disclosure may be a nonwoven fibrous web composed of a plurality of randomly oriented fibers. The nonwoven fibrous web refers to a sheet having a structure of individual fibers or filaments that are interlaid not in the same manner as a woven fabric. The nonwoven fibrous web may be manufactured by any one method selected from the group consisting of carding, garneting, air-laying, wet-laying, melt blowing, spun bonding, and stitch bonding.

The fibers may include one or more polymeric materials, and any material that is generally used as a fiber-forming polymeric material may be used, and specifically, a hydrocarbon-based fiber-forming polymeric material may be used. For example, the fiber-forming polymeric material may include any one selected from the group consisting of polyolefins such as polybutylene, polypropylene, and polyethylene, polyesters such as polyethylene terephthalate and polybutylene terephthalate, polyamides (nylon-6 and nylon-6,6), polyurethane, polybutene, polylactic acid, polyvinyl alcohol, polyphenylene sulfide, polysulfone, liquid crystalline polymers, polyethylene-co-vinyl acetate, polyacrylonitrile, cyclic polyolefins, polyoxymethylene, polyolefin-based thermoplastic elastomers, and combinations thereof. However, the technical spirit of the present disclosure is not limited thereto.

The non-fluorine-based porous support according to an embodiment of the present disclosure may include a nanoweb in which nanofibers are integrated in the form of a nonwoven fabric including a plurality of pores.

The nanofibers may preferably be made of a hydrocarbon-based polymer that exhibits excellent chemical resistance and hydrophobicity, so that there is no concern of deformation due to moisture in high-humidity environments. Specifically, the hydrocarbon-based polymer may be selected from the group consisting of nylon, polyimide, polyaramid, polyetherimide, polyacrylonitrile, polyaniline, polyethylene oxide, polyethylene naphthalate, polybutylene terephthalate, styrene-butadiene rubber, polystyrene, polyvinyl chloride, polyvinyl alcohol, polyvinyl butylene, polyurethane, polybenzoxazole, polybenzimidazole, polyamideimide, polyethylene terephthalate, polyphenylene sulfide, polyethylene, polypropylene, copolymers thereof, and a mixture thereof, and among these, polyimide, which exhibits superior heat resistance, chemical resistance, and morphological stability, may be preferably used.

The nanoweb is an aggregate of nanofibers in which the nanofibers, manufactured by electrospinning, are randomly arranged. Here, considering the porosity and thickness of the nanoweb, it is preferable that the nanofibers have an average diameter of 40 to 5,000 nm determined by measuring the diameters of 50 fibers using a scanning electron microscope (JSM6700F, JEOL) and calculating the average thereof.

When the average diameter of the nanofibers is less than the above numerical range, the mechanical strength of the porous support may decrease. When the average diameter of the nanofibers exceeds the above numerical range, the porosity may significantly decrease, and the thickness may increase.

The thickness of the nonwoven fibrous web may be 10 to 50 $\mu$m, and specifically, 15 to 43 $\mu$m. When the thickness of the nonwoven fibrous web is less than the above numerical range, the mechanical strength may decrease. When the thickness of the nonwoven fibrous web exceeds the above numerical range, resistance loss may increase, and weight reduction and integration may degrade.

The nonwoven fibrous web may have a basis weight of 5 to 30 mg/cm$^2$. When the basis weight of the nonwoven fibrous web is less than the above numerical range, visible pores may be formed, making it difficult to function as a porous support. When the basis weight of the nonwoven fibrous web exceeds the above numerical range, the nonwoven fibrous web may be manufactured in a form similar to paper or fabric with little to no pore formation.

The porosity may be calculated according to Equation 1, based on the ratio of an air volume in the porous support to a total volume of the porous support. Here, the total volume may be calculated by preparing a rectangular sample and measuring its width, height and thickness. The air volume may be obtained by measuring the mass of the sample and then subtracting the polymer volume, which is calculated inversely from the density, from the total volume.

$$\text{Porosity (\%)} = (\text{air volume in porous support/total volume of porous support}) \times 100 \qquad \text{[Equation 1]}$$

The porosity of the porous support 51 according to the present disclosure may correspond to 30 to 90%, and preferably 50 to 85%. When the porosity of the porous support is less than the above numerical range, a problem of reduced impregnation of the ion conductor may occur. When the porosity of the porous support exceeds the above numerical range, morphological stability may decrease, and thus a subsequent process may not be smoothly performed.

A first ion conductor layer 53a according to the present disclosure is disposed on the first surface of the porous support 51. Specifically, as the first ion conductor layer 53a includes an absorbent compound that forms a basket structure through molecular motion, it is possible to maintain the moisture content in the polymer electrolyte membrane under high-temperature and/or low-humidity conditions while improving ionic conductivity performance, minimize mass transport resistance caused by excessive water generated at a cathode during fuel cell operation, and make moisture distribution in the polymer electrolyte membrane even. For example, the absorbent compound of the first ion conductor layer may be referred to as a first absorbent compound.

A second ion conductor layer 53b according to the present disclosure is disposed on a second surface of the porous support 51 opposite to the first surface. Specifically, the first ion conductor layer 53a may be positioned opposite to the second ion conductor layer 53b, and the polymer electrolyte membrane 51 may be disposed between the first and second ion conductor layers 53a and 53b.

The second ion conductor layer 53b according to the present disclosure does not include an absorbent compound. Here, the absorbent compound of the second ion conductor layer 53b may be referred to as a second absorbent compound. If the second ion conductor layer 53b includes an absorbent compound, the time required for the polymer electrolyte membrane to reach ionic conductivity performance (the time to reach complete wetting) may become longer, which may cause a problem in that the moisture contained in the electrolyte membrane cannot be evenly distributed.

The first ion conductor layer according to the present disclosure may include a first ion conductor, and the second ion conductor layer may include a second ion conductor.

In some embodiments of the present disclosure, the content of the absorbent compound may be 0.1 to 20 parts by weight, specifically 0.2 to 15 parts by weight, more specifically 0.5 to 10 parts by weight, further specifically 0.5 to 7.5 parts by weight, 0.5 to 7.0 parts by weight, 0.5 to 6.0 parts by weight, 0.5 to 5.0 parts by weight, 0.5 to 4.0 parts by weight, 0.5 to 3.0 parts by weight, 0.5 to 2.0 parts by weight, or 0.5 to 1.0 parts by weight, preferably 0.5 to 0.7 parts by weight, and more preferably from 0.5 to 0.6 parts by weight, based on 100 parts by weight of the first ion conductor (total solid content of the first ion conductor dispersion). When the content of the absorbent compound satisfies the above numerical range, as the moisture content in the polymer electrolyte membrane under high-temperature and/or low-humidity conditions is sufficient, it is possible to further improve proton conductivity performance and at the same time shorten a time to reach complete wetting.

In some embodiments of the present disclosure, after drying in a vacuum oven at 90°C for 24 hours, the time to reach complete wetting of the polymer electrolyte membrane, measured at 1-minute intervals for 80minutes while flowing nitrogen at a flow rate of 500 ccm for 30 minutes and then flowing 50% humidity nitrogen at the same flow rate, may be 64 minutes or less, 61 minutes or less, 58 minutes or less, 57 minutes or less, or 52 minutes or less, and specifically, may be in a range from 50 minutes or more to any one of the plurality of values descried above as an upper limit. Here, the time to reach complete wetting is a time required for the ionic conductivity of the polymer electrolyte membrane to reach saturation. When the time to reach complete wetting satisfies the above numerical range, the moisture absorption capacity of the polymer electrolyte membrane may be further improved.

In some embodiments of the present disclosure, the water content of the polymer electrolyte membrane measured at 80°C and 50% R.H may be 4.8% or more, 5.0% or more, 5.4% or more, 5.5% or more, 5.7% or more, 5.8% or more, 6.0% or more, 6.5% or more, 7.0% or more, or 7.3% or more, and specifically, may be in a range from any one of the plurality of values described above as a lower limit to 8% or less as an upper limit. When the water content of the polymer electrolyte membrane satisfies the above numerical range, the moisture absorption capacity of the polymer electrolyte membrane may be further improved.

## 3. Membrane-electrode assembly

Fig. 1B is a cross-sectional view showing a membrane-electrode assembly according to an embodiment of the present disclosure.

Referring to Fig. 1A and Fig. 1B, another embodiment of the present disclosure provides a membrane-electrode assembly 100 including the polymer electrolyte membrane 50. The membrane-electrode assembly 100 according to the present disclosure includes an anode 20, a cathode 20', and the polymer electrolyte membrane 50 of some embodiments disposed between the anode 20 and the cathode 20'. Specifically, the first ion conductor layer 53a is in contact with the anode 20. As the first ion conductor layer is disposed to be in contact with the anode, it is possible to improve ionic conductivity performance by maintaining the moisture content in the polymer electrolyte membrane under high-temperature and/or low-humidity conditions, and make moisture distribution in the polymer electrolyte membrane even by absorbing moisture generated at a cathode during fuel cell operation.

In some examples, the thickness of each of the first and second ion conductor layers 53a and 53b may independently be 0.5 to 40 $\mu$m, specifically 1 to 30 $\mu$m, and more specifically 1 to 20 $\mu$m. When the thickness of the first and second ion conductor layers satisfies the above numerical range, it is possible to make moisture distribution in the polymer electrolyte membrane sufficiently even by absorbing moisture generated at a cathode during fuel cell operation.

When both the anode 20 and the cathode 20' are referred to as electrodes, the electrodes 20 and 20' may include electrode substrates 40 and 40', and catalyst layers 30 and 30' formed on the surfaces of the electrode substrates 40 and 40', and may further include a microporous layer (not shown), including conductive fine particles such as carbon powder or carbon black, between the electrode substrates 40 and 40' and the catalyst layers 30 and 30' to facilitate material diffusion in the electrode substrates 40 and 40'.

In the membrane-electrode assembly 100, an electrode 20 that is disposed on one surface of the polymer electrolyte membrane 50 and causes an oxidation reaction of generating hydrogen ions and electrons from fuel delivered through the electrode substrate 40 to the catalyst layer 30 is referred to as an anode electrode.

An electrode 20' that is disposed on the other surface of the polymer electrolyte membrane 50 and causes a reduction reaction of generating water from hydrogen ions supplied through the polymer electrolyte membrane 50 and an oxidant delivered through the electrode substrate 40' to the catalyst layer 30' is referred to as a cathode electrode.

The catalyst layers 30 and 30' of the anode and cathode electrodes 20 and 20' include a catalyst. As the catalyst, any material capable of participating in the cell reaction and being commonly used as a catalyst of a fuel cell may be used. Preferably, a platinum-based metal may be used.

The platinum-based metal may include one selected from the group consisting of platinum (Pt), palladium (Pd), ruthenium (Ru), iridium (Ir), osmium (Os), a platinum-M alloy, a non-platinum alloy, and combinations thereof. More preferably, a combination of two or more metals selected from the platinum-based catalyst metal group may be used. However, the present disclosure is not limited thereto, and any platinum-based catalyst metal usable in the art may be used without limitation.

The M may correspond to one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh). Specifically, as the platinum alloy, one or a combination of two or more selected from the group consisting of Pt-Pd, Pt-Sn, Pt-Mo, Pt-Cr, Pt-W, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr-Ir and combinations thereof may be used.

In addition, as the non-platinum alloys, one or a combination of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, and combinations thereof may be used.

As the catalyst, a catalyst itself (black) may be used or a catalyst may be used by being supported on a carrier.

## 4. Fuel cell

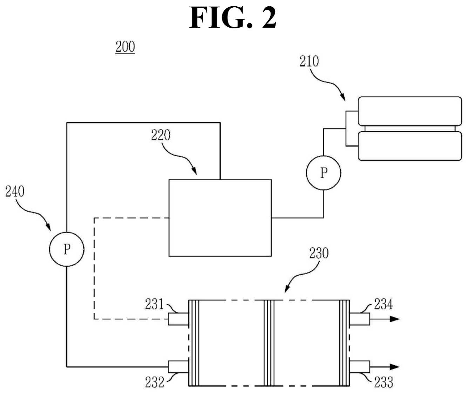

Fig. 2 is a schematic diagram showing a fuel cell according to an embodiment of the present disclosure.

Another embodiment of the present disclosure provides a fuel cell including the membrane-electrode assembly.

Referring to Fig. 2, a fuel cell 200 according to the present disclosure may include a fuel supply unit 210 that supplies a mixed fuel in which fuel and water are mixed, a reforming unit 220 that reforms the mixed fuel to generate a reformed gas containing hydrogen gas, a stack 230 in which an electrochemical reaction is caused between the reformed gas containing hydrogen gas supplied from the reforming unit 220 and an oxidant to generate electrical energy, and an oxidant supply unit 240 that supplies the oxidant to the reforming unit 220 and the stack 230.

The stack 230 may include a plurality of unit cells that induce an oxidation/reduction reaction of a reformed gas containing hydrogen gas supplied from the reforming unit 220 and an oxidant supplied from the oxidant supply unit 240 to generate electrical energy.

Each unit cell means a unit cell that generates electricity, and may include the membrane-electrode assembly that performs an oxidation/reduction reaction between the reformed gas containing hydrogen gas and the oxygen in the oxidant, and separators (also referred to as bipolar plates, hereinafter referred to as 'separators') for supplying the reformed gas containing hydrogen gas and the oxidant to the membrane-electrode assembly. The separators are disposed on both sides of the membrane-electrode assembly with the membrane-electrolyte membrane interposed therebetween. Here, the separators respectively located at the outermost sides of the stack are also specifically referred to as end plates.

Among the separators, one end plate may include a first supply pipe 231 in the shape of a pipe for injecting reformed gas containing hydrogen gas supplied from the reforming unit 220, and a second supply pipe 232 in the shape of a pipe for injecting oxygen gas. The other end plate may include a first discharge pipe 233 for discharging to the outside the reformed gas containing hydrogen gas that is ultimately unreacted and remains in the plurality of unit cells, and a second discharge pipe 234 for discharging to the outside the oxidant that is ultimately unreacted and remains in the unit cells.

In the fuel cell, because the separators, the fuel supply unit and the oxidant supply unit constituting a power generation unit are used in a conventional fuel cell, detailed descriptions thereof will be omitted herein.

Hereinafter, Examples of the present disclosure will be described in detail so that those skilled in the art can readily practice the present disclosure. However, these Examples are nothing but a mere illustration, and the scope of the present disclosure is not limited to the contents described below.

[Preparation Example 1: **Preparation of ion conductor composition**]

An ion conductor composition was prepared according to the composition shown in Table 1 below. In Table 1 below, the content of the absorbent compound was set as a relative content based on 100 parts by weight of the total solids (ion conductor) of the ion conductor dispersion.

[Table 1]

| Unit: Parts by weight | Ion conductor[1] | EDTA | Phytic acid | Deferasirox | Porphine | Phthalocyanine | 12-crown-4 |
|---|---|---|---|---|---|---|---|
| Compara tive Prepara tion Example 1 | 100 | - | - | - | - | - | - |
| Prepara tory Example 1 | 100 | 0.5 | - | - | - | - | - |
| Prepara tory Example 2 | 100 | - | 0.5 | - | - | - | - |
| Prepara tory Example 3 | 100 | - | - | 0.5 | - | - | - |
| Prepara tory Example 4 | 100 | - | - | - | 0.5 | - | - |
| Prepara tory Example 5 | 100 | - | - | - | - | 0.5 | - |
| Prepara tory Example 6 | 100 | - | - | - | - | - | 0.5 |
| 1) Total solids of 20 wt% Nafion dispersion (D2020 from Chemours, USA) | | | | | | | |

**[Preparation Example 2: Manufacturing of polymer electrolyte membrane (reinforced composite membrane)]**
**<Comparative Example 1: Commercial reinforced composite membrane without absorbent compound>**

After coating the ion conductor dispersion according to Comparative Preparation Example 1 onto a substrate (film or glass plate), a PTFE support (porosity: 80%; pore size: 0.45 $\mu$m; thickness: 10 $\mu$m) was placed thereon, and the assembly was impregnated at room temperature for 60 minutes. Then, the ion conductor dispersion of Comparative Preparation Example 1 was additionally applied to the opposite surface of the coated PTFE and dried at 120°C for 30 minutes to manufacture a polymer electrolyte membrane (or reinforced composite membrane) with a total thickness of 20 $\mu$m.

**<Comparative Example 2: Reinforced composite membrane including absorbent compound on both surfaces of and inside reinforced composite membrane>**

A reinforced composite membrane was manufactured in the same manner as in Comparative Example 1, except that the ion conductor composition of Preparatory Example 1 was used instead of the ion conductor composition of Comparative Preparation Example 1. As a result, ion conductor layers (each thickness: 3 $\mu$m) obtained as the ion conductor composition of Preparatory Example 1 is dried were formed on both surfaces of the reinforced composite membrane, and the internal pores of the porous support were impregnated with the ion conductor composition of Preparatory Example 1. Thus, the ion conductor layers introduced on both surfaces of the reinforced composite membrane may be in contact with the anode and the cathode, respectively, during a process for manufacturing a membrane-electrode assembly to be described below.
Meanwhile, Comparative Example 2 was marked as "Anode + Cathode" in Table 1 below, because each of the ion conductor layers may be in contact with both the anode and the cathode.

**<Examples 1 to 6: Reinforced composite membrane having ion conductor layer including absorbent compound disposed on only one surface of reinforced composite membrane>**

A reinforced composite membrane was manufactured in the same manner as in Comparative Example 1, except that the impregnation time was changed from 1 hour to 30 minutes to form a preliminary reinforced composite membrane in which a second ion conductor layer not including an absorbent compound is disposed on only one surface of the reinforced composite membrane.
Dried ion conductor layers (each thickness: 3 $\mu$m) using the ion conductor composition (including an absorbent compound) according to Preparatory Examples 1 to 6 were each applied to the other surface opposite to the one surface of the preliminary reinforced composite membrane using a laminating method (pressure: 0.4 kgf/cm$^2$; temperature: 80°C;

time: 10 minutes), and then dried at 120°C for 30 minutes to form a first ion conductor layer (thickness: 3 $\mu$m).

[Table 2]

| Unit: Parts by weight | Ion conductor [1] | EDTA | Phytic acid | Deferasirox | Porphine | Phthalocyanine | 12-crown-4 | Note |
|---|---|---|---|---|---|---|---|---|
| Comparative Example 1 | 100 | - | - | - | - | - | - | Porous support[2] |
| Comparative Example 2 | 100 | 0.5 | - | - | - | - | - | Porous support[2] + Anode + Cathode |
| Example 1 | 100 | 0.5 | - | - | - | - | - | Porous support[2] + Anode |
| Example 2 | 100 | - | 0.5 | - | - | - | - | Porous support[2] + Anode |
| Example 3 | 100 | - | - | 0.5 | - | - | - | Porous support[2] + Anode |
| Example 4 | 100 | - | - | - | 0.5 | - | - | Porous support[2] + Anode |
| Example 5 | 100 | - | - | - | - | 0.5 | - | Porous support[2] + Anode |
| Example 6 | 100 | - | - | - | - | - | 0.5 | Porous support[2] + Anode |
| 1) Total solids of 20 wt% Nafion dispersion (D2020 from Chemours, USA) | | | | | | | | |
| 2) Polytetrafluoroethylene (PTFE) support (porosity: 80%; pore size: 0.45 $\mu$m; thickness: 10 $\mu$m) | | | | | | | | |

**Experimental Example: Ionic conductivity, low-humidity water content, and dimensional stability evaluation experiment]**

**1) Ionic conductivity (high-temperature/low-humidity conditions; 80°C/50% RH) and time to reach complete wetting (min)**

<u>Ionic conductivity</u>

For the membrane-electrode assembly manufactured by directly coating an electrode slurry (weight ratio of Pt/C and PFSA binder = 1:0.35 (w/w)) on both surfaces of the reinforced composite membrane manufactured according to Preparation Example 1, followed by drying, the ionic conductivity was measured at a measurement temperature of 80°C using a measuring instrument (MTS-740, Scriber). Specifically, the ohmic resistance or bulk resistance was measured using the four-point probe AC impedance spectroscopic method, and then the ionic conductivity was calculated using the following Equation 2.

# EP 4 693 535 A2

[Equation 2]

$$\sigma = L/RS$$

wherein $\sigma$ is the ionic conductivity (S/cm), R is the ohmic resistance ($\Omega$) of the electrolyte membrane, L is the distance between electrodes (cm), and S is the area (cm$^2$) in the electrolyte through which a constant current flows.

Time to reach complete wetting

Here, in order to restrict the location where humidity is supplied, one surface of the film (polymer electrolyte membrane) was adjusted to be in a completely adhered state. In this case, the electrolyte membrane was in a state in which it was dried in a vacuum oven at 90°C for 24 hours. The dried electrolyte membrane was placed in an ionic conductivity cell, and nitrogen was flowed at a flow rate of 500 ccm for 30 minutes under completely dry conditions. Then, nitrogen at 50% humidity was flowed at the same flow rate, and ionic conductivity was measured at 1-minute intervals for 80 minutes. The time at which the ionic conductivity reached saturation was measured to measure the time required for the polymer electrolyte membrane to reach moisture equilibrium. Here, when the time to reach complete wetting was less than 65 minutes, the moisture absorption capacity of the polymer electrolyte membrane could be evaluated as being improved compared to conventional membranes.

**2) Low-humidity water content (high-temperature/low-humidity conditions; 80°C/50% RH)**

The polymer electrolyte membrane of Preparation Example 1 was washed several times with deionized water, The washed membrane was then dried in a vacuum dryer at 90°C for 24 hours, and its weight was measured ($W_{dry}$). Then, the same membrane was left to stand in a chamber at conditions of 80°C and 50% RH for 4 hours, and its weight was measured inside the chamber ($W_{wet}$). Thereafter, the low-humidity water content was calculated using the following Equation 3. A water content range of 4.8% or more under high-temperature and low-humidity conditions could indicate excellent performance of the membrane-electrode assembly.

[Equation 3]

$$\text{Water uptake } (\%) = [(W_{wet} - W_{dry}) / W_{dry}] \times 100$$

[Table 3]

| Samples | Basket structure compound application location | Absorbent compound type | Ionic conductivity (S/cm) | Time to reach complete wetting (min) | Low-humidity water content (%) |
|---|---|---|---|---|---|
| Comparative Example 1 | - | - | 0.0213 | 73 | 3.123 |
| Comparative Example 2 | First and second ion conductor layers | EDTA | 0.0274 | 65 | 6.028 |
| Example 1 | First ion conductor layer | EDTA | 0.0265 | 61 | 5.761 |
| Example 2 | First ion conductor layer | Phytic acid | 0.0237 | 52 | 5.476 |
| Example 3 | First ion conductor layer | Deferasirox | 0.0255 | 64 | 5.502 |
| Example 4 | First ion conductor layer | Porphine | 0.0273 | 57 | 7.300 |
| Example 5 | First ion conductor layer | Phthalocyanin e | 0.0269 | 58 | 5.856 |
| Example 6 | First ion conductor layer | 12-crown-4 | 0.0257 | 58 | 5.731 |

In Table 3, a comparison between Comparative Example 1 and Example 1 in terms of ionic conductivity of the polymer electrolyte membrane depending on the presence or absence of the absorbent compound showed that, compared to the polymer electrolyte membrane not including the absorbent compound (Comparative Example 1), the polymer electrolyte membrane (Example 1), in which the absorbent compound was applied only to the first ion conductor layer, exhibited higher absorbency, resulting in increased low-humidity water content and ionic conductivity, as well as a shorter time to reach complete wetting, thereby providing the effect of evenly controlling the moisture distribution in the polymer electrolyte membrane. A comparison between Comparative Example 2 and Example 1 in terms of the time to reach complete wetting depending on the location of application of the absorbent compound showed that, in Comparative Example 2, in which the absorbent compound was applied to both the first and second ion conductor layers, the ion conductivity was slightly higher than that of Example 1, in which the absorbent compound was applied only to the first ion conductor layer. However, the time to reach complete wetting was relatively longer, resulting in difficulty in evenly controlling the moisture distribution in the electrolyte membrane. In contrast, in Example 1, by applying the absorbent compound only to the first ion conductor layer, the ion conductivity was raised to appropriate level, and the time to reach complete wetting was shortened, thereby providing the effect of evenly controlling the moisture distribution.

Although the preferred embodiments of the present disclosure have been described above in detail, the scope of the present disclosure is not limited thereto, and various modifications and improvements made by those skilled in the art using the basic concept of the present disclosure defined in the following claims also fall within the scope of the present disclosure.

**Claims**

1.   A polymer electrolyte membrane comprising:

a porous support;
a first ion conductor layer disposed on a first surface of the porous support; and
a second ion conductor layer disposed on a second surface of the porous support opposite to the first surface,
wherein the first ion conductor layer comprises an ion conductor and an absorbent compound,
wherein the absorbent compound forms a basket structure through molecular motion, and
wherein the second ion conductor layer does not comprise an absorbent compound.

2.   The polymer electrolyte membrane according to claim 1, wherein the absorbent compound of the first ion conductor layer comprises at least one of a hexadentate ligand; an alicyclic compound having 5 to 6 carbon atoms and containing 4 or more hydrophilic functional groups in a side chain; a 4-pyrrole-containing compound; a triazole-based compound containing 3 or more hydrophilic functional groups in a side chain; a phosphonic acid-based compound; a compound containing two or more benzene rings in a molecule; a chain-type compound containing an amino group and a carboxyl group; and a crown ether-based compound.

3.   The polymer electrolyte membrane according to claim 2, wherein the hexadentate ligand is any one selected from the group consisting of ethylenediaminetetraacetic acid (EDTA), hydroxyethylethylenediaminetriacetic acid (HEDTA), and combinations thereof.

4.   The polymer electrolyte membrane according to claim 2, wherein the alicyclic compound having 5 to 6 carbon atoms and containing 4 or more hydrophilic functional groups in a side chain comprises phytic acid.

5.   The polymer electrolyte membrane according to claim 2, wherein the 4-pyrrole-containing compound comprises any one selected from the group consisting of a substituted or unsubstituted porphine; a substituted or unsubstituted phthalocyanine; and combinations thereof.

6.   The polymer electrolyte membrane according to claim 2, wherein the triazole-based compound containing 3 or more hydrophilic functional groups in a side chain comprises deferasirox.

7.   The polymer electrolyte membrane according to claim 2, wherein the crown ether-based compound includes a molecular structure represented by the following general formula 1 as a backbone:

[Formula 1]          $[C_2H_4O]_n$

wherein n is 3 to 10.

8.   The polymer electrolyte membrane according to claim 1, wherein the ion conductor is included in internal pores of the porous support.

9. A membrane-electrode assembly comprising:

an anode;
a cathode; and
the polymer electrolyte membrane according to claim 1 disposed between the anode and the cathode, wherein the first ion conductor layer is in contact with the anode.

10. A fuel cell comprising the membrane-electrode assembly according to claim 9.

# FIG. 1A

50

| | 53a |
| | 51 |
| | 53b |

# FIG. 1B

100

20      20'

40   30   50   30'   40'

# FIG. 2